# DEMANDE DE BREVET EUROPEEN

(11) **EP 1 619 529 A1**
(43) Date de publication de la demande: **25.01.2006**
(21) Numéro de dépôt: 05291484.3
(22) Date de dépôt: 08.07.2005
(51) Int. Cl.: G02B 7/00, H04N 9/31

(54) **Moteur optique pour la projection d'images et appareil de television comportant un tel moteur optique**

(30) Priorité: 20.07.2004 FR 0408041
(71) Demandeur: Sagem SA, 75015 Paris (FR)
(72) Inventeur: Kuhn, Alex, 95430 Auvers sur Oise (FR)
(74) Mandataire: Loisel, Bertrand

(57) **Abrégé**

Le moteur optique (2) comprend un boîtier (12, 13) à l'intérieur duquel un trajet optique est défini entre une source de lumière blanche et un objectif de projection. Le boîtier contient un modulateur de lumière (10) et une roue chromatique (20) disposés le long du trajet optique. La roue chromatique est montée sur un support (30) avec un moteur d'entraînement en rotation, et comporte des filtres colorés successivement placés sur le trajet optique lors de la rotation de la roue chromatique. Le support de la roue chromatique est installé sur le boîtier de manière à être accessible et démontable avec la roue et le moteur depuis l'extérieur du boîtier.

## Description

La présente invention concerne les moteurs optiques utilisés dans certains appareils numériques de projection d'images tels que vidéoprojecteurs et téléviseurs à projection par l'arrière. Elle s'applique notamment aux appareils utilisant la technologie dite DLP™ ("Digital Light Processing", traitement numérique de lumière) pour générer la modulation optique d'un faisceau lumineux à projeter.

Dans le cas de la technologie DLP, le moteur optique comporte une matrice de réflecteurs élémentaires orientables appelée DMD™ ("Digital Micromirror Device", dispositif numérique à micromiroirs), chaque réflecteur étant commandé en fonction de l'intensité lumineuse d'un pixel correspondant de l'image à projeter. Dans la plupart des appareils, la lumière provient d'une lampe délivrant une lumière blanche. Le modulateur DMD envoie vers un objectif de projection le faisceau de lumière issu de la lampe, modulé selon un signal vidéo pour produire une image.

Pour obtenir une image en couleurs, une roue chromatique est placée sur le trajet optique entre la lampe et le modulateur. Cette roue comporte des secteurs colorés qui filtrent la lumière blanche selon les trois composantes de couleur. La rotation de la roue fait que des faisceaux rouge, vert et bleu sont envoyés en alternance sur le modulateur. Le modulateur est commandé en synchronisme avec la rotation de la roue de façon à produire la modulation chromatique de l'image à partir des trois composantes de couleur du signal vidéo.

La roue est entraînée en rotation par un moteur électrique à vitesse relativement élevée (typiquement de 7200 à 10800 tours par minute). Un défaut d'équilibrage de la roue, même léger, donne alors lieu à des vibrations. Les paliers du moteur d'entraînement sont également sujets à usure avec le temps. Le moteur optique ne comporte souvent pas d'autres pièces mobiles.

La roue chromatique peut ainsi constituer le maillon faible du moteur optique, lors de la fabrication et aussi en termes de fiabilité au cours de l'utilisation.

L'agencement du moteur optique ne permet pas toujours de remplacer la roue chromatique. Et si on peut la remplacer, cela requiert l'ouverture du boîtier du moteur optique, et provoque donc un risque de pollution des éléments optiques par introduction de poussières ou de salissures. L'ouverture du boîtier provoque aussi un risque de désalignement de la chaîne optique qu'il contient. L'alignement optique est très sensible aux déplacements, même petits, de certains éléments de la chaîne optique.

Un but de la présente invention est de remédier à ces inconvénients.

L'invention propose ainsi un moteur optique pour un appareil de projection d'images, comprenant un boîtier à l'intérieur duquel un trajet optique est défini entre une source de lumière blanche et un objectif de projection, le boîtier contenant un modulateur de lumière et une roue chromatique disposés le long du trajet optique, la roue chromatique étant montée sur un support avec un moteur d'entraînement en rotation et comportant des filtres colorés successivement placés sur le trajet optique lors de la rotation de la roue chromatique. Selon l'invention, le support de la roue chromatique est installé sur le boîtier de manière à être accessible et démontable avec la roue et le moteur depuis l'extérieur du boîtier.

Le sous-ensemble roue chromatique + moteur d'entraînement + support forme un module démontable et remplaçable sans avoir besoin d'ouvrir le boîtier, ce qui évite les risques de pollution des éléments optiques. Un tel remplacement peut avoir lieu en usine après assemblage du moteur optique, sans qu'il soit nécessaire de retourner l'ensemble en salle blanche. Il peut aussi avoir lieu lors d'une opération de maintenance.

Le positionnement de la roue chromatique n'est généralement pas critique pour la précision de la chaîne optique. Le fait de ne pas devoir ouvrir le boîtier pour procéder à son remplacement évite les problèmes de désalignement dus aux démontage et remontage de parties du boîtier portant différents éléments définissant la géométrie du trajet optique (lampe, miroirs ou prismes de renvoi, modulateur, lentilles).

Un autre aspect de la présente invention se rapporte à un module de roue chromatique pour un moteur optique tel que défini ci-dessus. Ce module comprend un support ayant des moyens de montage amovible sur le boîtier du moteur optique, depuis l'extérieur dudit boîtier, une roue chromatique et un moteur d'entraînement de la roue chromatique en rotation par rapport au support. Il constitue une pièce de rechange qu'on peut assembler sur un boîtier de moteur optique pour remplacer un module du même type qui serait défectueux.

Un autre aspect de la présente invention se rapporte à un appareil de télévision à projection par l'arrière, comprenant un moteur optique tel que défini ci-dessus et une chambre de projection recevant de la lumière modulée issue du moteur optique pour affichage sur un écran situé sur une face avant de la chambre. Dans une réalisation préférée, le moteur optique est disposé dans l'appareil de façon que le support de la roue chromatique soit accessible et démontable sans avoir à extraire le moteur optique de l'appareil.

D'autres particularités et avantages de la présente invention apparaîtront dans la description ci-après d'exemples de réalisation non limitatifs, en référence aux dessins annexés, dans lesquels:
- la figure 1 est un schéma illustrant la structure générale d'un appareil de télévision selon l'invention;
- la figure 2 est une vue en perspective d'un moteur optique selon l'invention;
- la figure 3 est une vue en perspective de ce moteur optique avec le module de roue chromatique en cours de démontage ou remontage; et
- la figure 4 est une vue en perspective éclatée d'un module de roue chromatique selon l'invention.

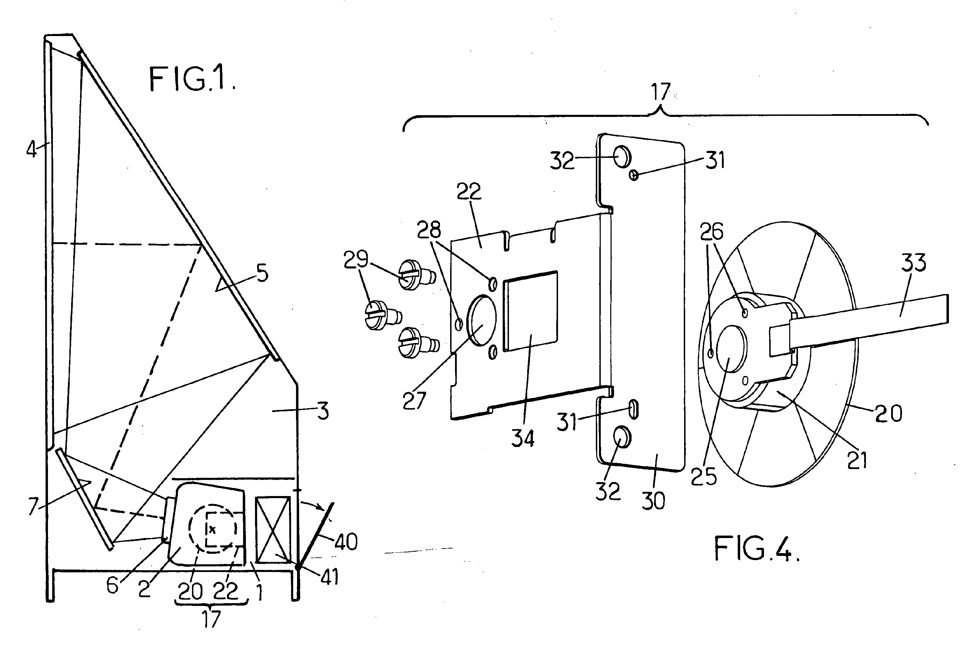

En référence à la figure 1, un appareil de télévision à projection par l'arrière a un compartiment inférieur 1 contenant divers éléments et circuits dont le moteur optique 2, et un compartiment supérieur 3 formant chambre de projection. La face avant de la chambre de projection 3 comporte un écran d'affichage 4. Derrière celui-ci, un grand miroir oblique 5 lui envoie la lumière provenant de l'objectif de projection 6 du moteur optique 2. Dans l'exemple représenté, un miroir intermédiaire 7 est prévu dans la chambre 3 entre l'objectif 6 et le grand miroir 5.

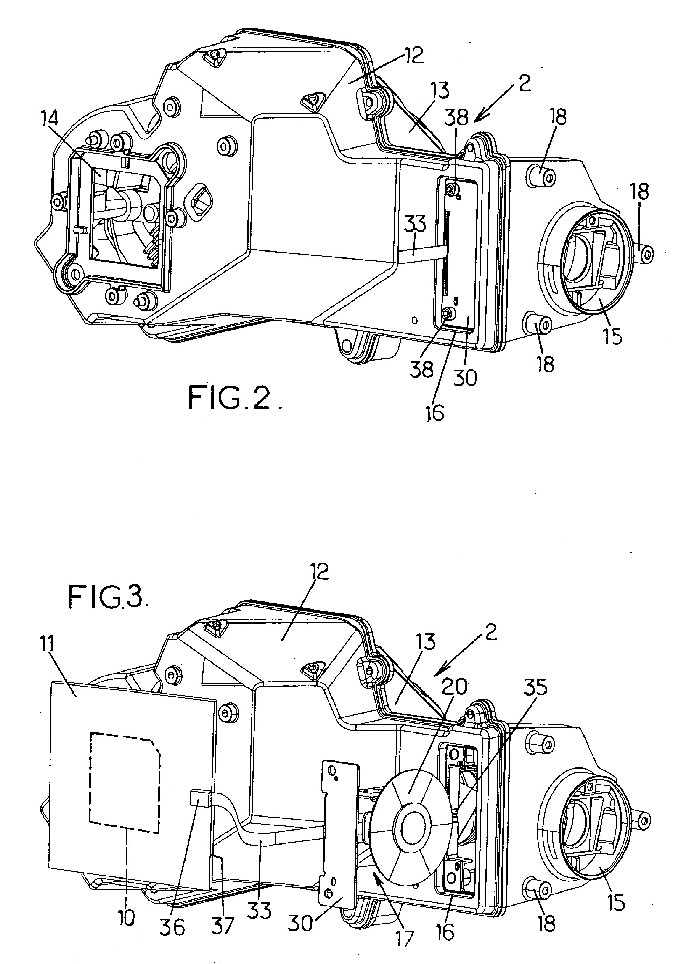

La vue en perspective des figures 2 et 3 montre le côté arrière du moteur optique 2. Le modulateur de lumière 10, par exemple de type DMD, est monté sur une carte électronique 11 représentée sur la figure 3 mais non sur la figure 2. La carte 11 porte divers composants d'électronique numérique (non représentés sur le dessin) pour le traitement du signal vidéo et la commande des micromiroirs du modulateur 10.

Le moteur optique 2 a un boîtier constitué par l'assemblage de deux coquilles 12, 13. Sur la face arrière du boîtier, la coquille 12 a un orifice 14 pour recevoir le modulateur de lumière et un orifice 16 pour recevoir un module de roue chromatique 17. Un orifice latéral 15 du boîtier constitue un port d'entrée pour le faisceau incident généré par un bloc de source lumineuse, non représenté. Un quatrième orifice, non visible sur les figures 2 et 3, est prévu sur la face avant du boîtier pour recevoir l'objectif de projection 6. Après assemblage du moteur optique 2, ces quatre orifices sont obturés par la carte 11, le module 17, le bloc de source lumineuse et l'objectif 6 afin que le boîtier soit fermé avec étanchéité, pour ne pas laisser pénétrer de poussières et autres corps étrangers qui pourraient affecter la qualité des images projetées.

Le bloc de source lumineuse contient une lampe émettant de la lumière blanche. Ce bloc est monté sur le boîtier moyen de connexions 18. Le faisceau de lumière blanche est focalisé par une optique d'entrée sur la roue chromatique 20 du module 17.

Dans l'exemple représenté, la roue chromatique 20 est un disque présentant six filtres colorés répartis en six secteurs angulaires. Chaque paire de filtres diamétralement opposés se compose de filtres de même couleur, la roue comportant deux filtres rouges, deux filtres verts et deux filtres bleus. La roue chromatique 20 est entraînée en rotation par un moteur 21 (figure 4) monté sur une platine de support 22. La rotation de la roue chromatique 20 place à tour de rôle les filtres colorés sur le trajet optique.

Le boîtier 12, 13 contient également une optique de guidage pour diriger le faisceau incident coloré sur le modulateur de lumière 10. Celui-ci est commandé en synchronisme avec la rotation de la roue pour produire la modulation lumineuse souhaitée, conformément au signal vidéo d'entrée. La lumière réfléchie par le dispositif à micro-miroirs 10 est dirigée vers l'objectif de projection 6 pour être projetée sur l'écran 4.

En référence à la figure 4, le capot du moteur d'entraînement 21 comporte un plot de positionnement 25 et trois orifices taraudés 26. De façon correspondante, la platine de support 22 présente un orifice 27 de forme complémentaire du plot 25 et trois trous 28 pour recevoir des vis 29 qui s'engagent dans les orifices 26 pour l'assemblage du module 17. Le côté arrière de la platine 22 a une partie repliée 30 de forme adaptée pour obturer l'orifice 16 du boîtier. Cette partie 30 présente deux trous 31 pour coopérer avec deux pions de positionnement prévus sur le boîtier 12 au niveau de l'orifice 16, et deux autres trous 32 pour recevoir des vis 38 d'assemblage du module 17 sur la coquille arrière 12 du boîtier.

L'assemblage de la roue chromatique 20 sur son support 22 et du support 22 sur la coquille 12 assure un positionnement relativement précis de la roue 20 par rapport à la chaîne optique. On notera toutefois que ce positionnement n'a pas besoin d'être d'une très grande précision contrairement à celui d'autres éléments de la chaîne optique, tels que l'optique d'entrée, l'optique de guidage interne au boîtier, le modulateur de lumière 10 ou l'objectif de projection 6.

Ainsi, le démontage et le remontage du module de roue chromatique 17 après le réglage spatial de la chaîne optique ne posent pas de problème. Le fait que ces démontage et remontage puissent être effectués sans avoir à ouvrir le boîtier 12, 13 permet de remplacer un module 17 qui serait défectueux sans perturber l'alignement optique.

En outre, comme il n'est pas nécessaire de séparer les deux coquilles 12, 13 du boîtier pour accéder à la roue chromatique 20, son remplacement peut être effectué sans que l'intérieur du boîtier soit contaminé par des poussières ou salissures.

Le module de roue chromatique 17 comporte également un câble plat 33 incluant des fils électriques pour l'alimentation du moteur 21 et pour adresser à des composants de contrôle montés sur la carte électronique 11 des informations de synchronisation décrivant la position angulaire de la roue 20. Le câble plat 33 est tenu sur la platine 22 en traversant un orifice 34 de manière à ne pas gêner le mouvement de la roue 20. Il passe dans une petite échancrure 35 prévue sur le bord de l'orifice 16 de la coquille 12 afin de sortir du boîtier au niveau du support 22 pour se raccorder à la carte électronique 11. Comme le montre la figure 3, ce raccordement s'effectue au niveau d'un connecteur 36 placé sur un bord 37 de la carte 11. Pour faciliter le démontage du module de roue chromatique 17, l'orifice 16 servant à l'installer sur le boîtier 12, 13 est disposé de façon adjacente au bord 37 de la carte 11. Pour procéder au démontage, on déconnecte le câble 33 du connecteur 36, on retire les vis 38 d'assemblage du support 22 et on tire le module 17 vers la position montrée sur la figure 3.

Dans l'application du moteur optique selon l'invention à un appareil de télévision tel que celui représenté sur la figure 1, il est avantageux de pouvoir accéder et démonter le module de roue chromatique 17 sans avoir à extraire le moteur optique du compartiment 1 qui le contient. Ceci évite, lors d'une opération de maintenance, d'avoir à recommencer le réglage de positionnement du moteur optique 2 par rapport à la chambre de projection 3.

A cet effet, la conception du compartiment inférieur 1 et du moteur optique 2 est telle qu'on puisse accéder au module 17 sans dépose du moteur optique. Dans l'exemple représenté sur la figure 1, cet accès s'effectue à travers une trappe 40 prévue sur le côté arrière de l'appareil, en face de l'emplacement du module de roue chromatique 17. L'ouverture de cette trappe 40 donne accès au module 17, éventuellement après extraction d'une ou plusieurs autres unités 41 logées dans le compartiment 1, dont le positionnement précis n'est pas critique. Une telle unité 41 peut par exemple, être un bloc d'alimentation électrique.

L'invention a été décrite précédemment dans son application préférée à un appareil de télévision à projection par l'arrière. On notera cependant que le moteur optique selon l'invention peut être utilisé dans d'autres types d'appareils tels que par exemple des vidéoprojecteurs.

## Revendications

1. Moteur optique pour un appareil de projection d'images, comprenant un boîtier (12, 13) à l'intérieur duquel un trajet optique est défini entre une source de lumière blanche et un objectif de projection (6), le boîtier contenant un modulateur de lumière (10) et une roue chromatique (20) disposés le long du trajet optique, la roue chromatique étant montée sur un support (22) avec un moteur d'entraînement en rotation (21) et comportant des filtres colorés successivement placés sur le trajet optique lors de la rotation de la roue chromatique, **caractérisé en ce que** le support de la roue chromatique est installé sur le boîtier de manière à être accessible et démontable avec la roue et le moteur depuis l'extérieur du boîtier.

2. Moteur optique selon la revendication 1, dans lequel des fils (33) de raccordement de la roue chromatique (20) et/ou du moteur d'entraînement (21) sont tenus sur le support (22) et sortent du boîtier au niveau du support (12, 13).

3. Moteur optique selon la revendication 2, dans lequel une carte électronique (11) est fixée à l'extérieur du boîtier (12, 13) pour la commande du modulateur de lumière (10) et de la roue chromatique (20), un bord (37) de la carte présentant des moyens de connexion (36) pour recevoir lesdits fils de raccordement, et dans lequel le support (22) de la roue chromatique est installé dans une zone du boîtier adjacente audit bord de la carte.

4. Module de roue chromatique (17) pour un moteur optique d'appareil de projection d'images conforme à l'une quelconque des revendications précédentes, comprenant un support (22) ayant des moyens (30-32) de montage amovible sur le boîtier (12, 13) du moteur optique (2), depuis l'extérieur dudit boîtier, une roue chromatique (20) et un moteur (21) d'entraînement de la roue chromatique en rotation par rapport au support.

5. Appareil de télévision à projection par l'arrière, comprenant un moteur optique (2) et une chambre de projection (3) recevant de la lumière modulée issue du moteur optique pour affichage sur un écran (4) situé sur une face avant de la chambre, dans lequel le moteur optique comprend un boîtier (12, 13) à l'intérieur duquel un trajet optique est défini entre une source de lumière blanche et un objectif de projection (6) dirigé vers la chambre, le boîtier contenant un modulateur de lumière (10) et une roue chromatique (20) disposés le long du trajet optique, la roue chromatique étant montée sur un support (22) avec un moteur d'entraînement en rotation (21) et comportant des filtres colorés successivement placés sur le trajet optique lors de la rotation de la roue chromatique, **caractérisé en ce que** le support de la roue chromatique est installé sur le boîtier de manière à être accessible et démontable avec la roue et le moteur depuis l'extérieur du boîtier.

6. Appareil selon la revendication 5, dans lequel le moteur optique (2) est disposé dans l'appareil de façon que le support (22) de la roue chromatique (20) soit accessible et démontable sans avoir à extraire le moteur optique de l'appareil.

7. Appareil selon la revendication 5 ou 6, dans lequel des fils (33) de raccordement de la roue chromatique (20) et/ou du moteur d'entraînement (21) sont tenus sur le support (22) et sortent du boîtier (12, 13) au niveau du support.

8. Appareil selon la revendication 7, dans lequel une carte électronique (11) est fixée à l'extérieur du boîtier (12, 13) pour la commande du modulateur de lumière (10) et de la roue chromatique (20), un bord (37) de la carte présentant des moyens de connexion (36) pour recevoir lesdits fils de raccordement, et dans lequel le support (22) de la roue chromatique est installé dans une zone du boîtier adjacente audit bord de la carte.
